# EUROPEAN PATENT SPECIFICATION

(11) **EP 3 126 187 B1**
(45) Date of publication and mention of the grant of the patent: **31.07.2019**
(21) Application number: 15774279.2
(22) Date of filing: 26.05.2015
(51) Int. Cl.: B60N 2/882, B60N 2/803, B60N 2/70, B64D 11/06, A47C 7/38

(54) **LIGHTWEIGHT HEADREST ASSEMBLY**
LEICHTE KOPFSTÜTZENANORDNUNG
ENSEMBLE APPUI-TÊTE LÉGER

(43) Date of publication of application: 08.02.2017
(73) Proprietor: Franklin Products, Inc., Torrington, CT 06790 (US)
(72) Inventor: VELASCO, Howard, Bristol, Connecticut 06010 (US)
(74) Representative: Toleti, Martin
(86) International application number: PCT/US2015/032361
(87) International publication number: WO 2015/154097

(56) References cited:
- US-A- 2 623 575
- US-A- 3 029 107
- US-A- 3 029 107
- US-A- 5 328 244
- US-A- 5 690 387
- US-A- 5 897 167
- US-A1- 2011 133 531

## Description

### BACKGROUND

### TECHNICAL FIELD

The invention relates to attachment of a rigid article to a flexible support. Exemplary embodiments of the invention relate to methods and articles for attaching headrest assemblies to mesh diaphragm seat back panels.

### DISCUSSION OF ART

Commercial aircraft seating is evolving to satisfy demands for greater comfort and cleaner styling within a smaller, lighter package. At the same time there is a need to reduce manufacturing and maintenance costs. The aircraft seating upholstery has a large influence on comfort, styling, weight and cost.

Commercial and residential furnishing are known that utilize woven or non-woven fabric or open-weave mesh as seating surfaces (panels). Such seating surfaces are essentially stretched diaphragms that form a suspension system between an occupant and a frame. This arrangement is becoming more common and has even been proposed for transportation applications including commercial aircraft.

Many chairs or seats have headrests that are mounted to the seat frame. In case such a frame-mounted headrest protrudes downward from the frame over a cloth or mesh diaphragm seat panel, then there is risk of damage to the seat panel by rubbing against the headrest, as the headrest typically does not move with the panel as an occupant shifts in the seat

US 5,328,244 A describes an example of a headrest assembly comprising a headrest frame, a pad and loops to attach the headrest assembly to a seat back.

### SUMMARY OF INVENTION

Embodiments of the invention provide modes for attaching a headrest to a seat panel, rather than to a seat frame, so as to alleviate risk of damage by rubbing of the seat panel against the headrest.

The invention is defined by the technical features set forth in claims 1 and 12 with additional features thereof being disclosed in the dependent claims.

Varied exemplary embodiments of the invention are illustrated by certain of the following figures.

### BRIEF DESCRIPTION OF DRAWINGS

FIGS. 1-2 show a headrest assembly attached to a seat back panel, according to an embodiment of the invention.
FIGS. 3-5 show the headrest assembly of FIGS. 1-2 attached to a seat back panel, according to other embodiments of the invention.

### DETAILED DESCRIPTION

Although embodiments of the invention are shown in the drawings and are described as relating to headrests that are attached to mesh diaphragm seat backs, aspects of the invention more generally may be applicable to headrests that are attached to lightweight solid, non-woven, or close-woven fabric seat back panels.

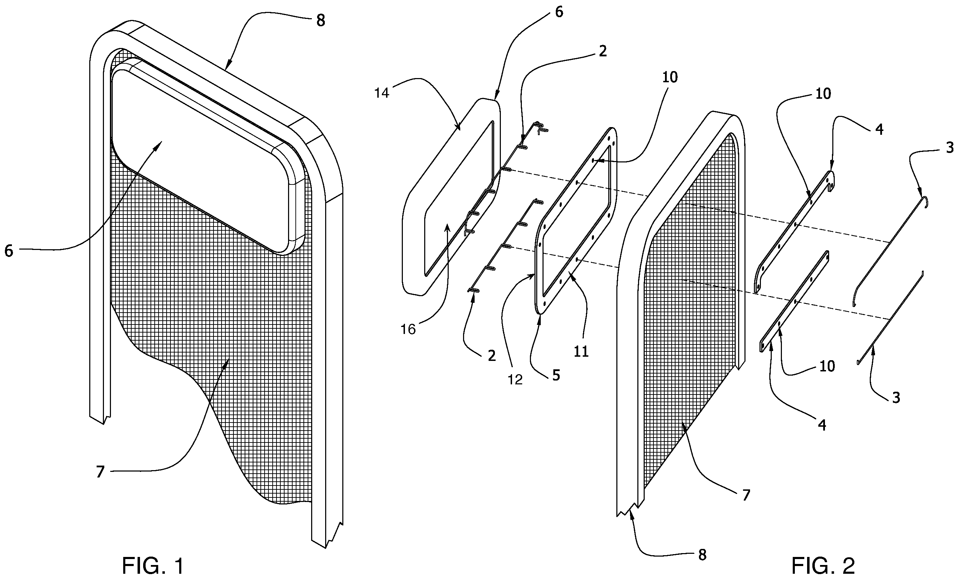

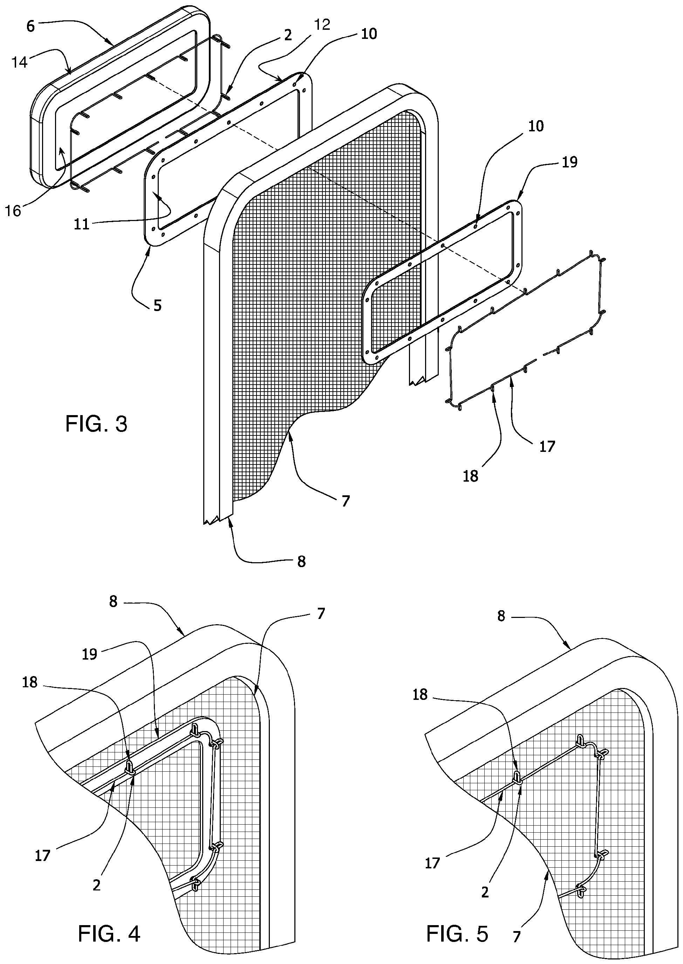

FIG. 1 shows a lightweight headrest assembly 6, which is assembled directly onto a mesh diaphragm or panel 7 that is strung across a seat back frame 8. As better shown in FIGS. 2 and 3, the headrest assembly 6 includes a headrest frame 5 to which are mounted a pad 16 and a covering 14, which are respectively secured to a front surface 12 and to a rear surface 11 of the headrest frame 5. The headrest frame 5 can be made of lightweight materials, e.g., reinforced plastic composite, molded plastic, or thin stamped metal. Wire loops 2 are mounted to protrude from the rear surface 11 of the headrest frame 5. For example, the wire loops 2 may be mounted in the headrest frame 5 by passing the loops through holes 10 and then potting the loops in place, e.g., with liquid epoxy. Alternatively, the wire loops 2 can be laid into a composite frame as it is laid up or laminated from sheets of fiber-resin composite material, or the wire loops 2 can be laid into a molded plastic frame during molding. Although the loops 2 are described as "wire," they equally can be monofilament, molded plastic,woven fabric, or any other material suitable for insertion through the panel 7 and locking engagement with a retainer 3, as further discussed below. The loops 2 can be discrete, or they can be integrally formed in one or more filaments that are laid onto the front surface 12 or among layers of a laminated frame 5.

When the headrest assembly 6 is installed onto a front surface of the mesh panel 7, the wire loops 2 protrude from the headrest frame 5 back surface 11, through the mesh panel 7. A backing plate 4 is placed against the back surface of the mesh panel 7 so that holes 10, formed in the backing plate 4, receive the wire loops 2. The wire loops 2 project through the holes 10 so that a wire retainer 3 (which may comprise multiple discrete pieces of wire) can be threaded through the loops 2. Ends of the wire retainer 3 then are bent to retain the wire in the loops 2, thereby locking the backing plate 4 and the headrest frame 5 together onto the mesh panel 7.

The headrest frame 5 and the backing plate 4 can be made flexible to bend as the mesh panel 7 is deflected by weight of the seat occupant. Also, the headrest assembly 6 can be made to have a curved (non-planar, e.g., cylindrical, conical, or toroidal) shape so that when it is installed the seat back panel 7 will be held in a corresponding shape. This provides a way to enhance the natural bolstering effect of the diaphragm panel 7, without complicating the shape of the seat frame 8.

As an alternative to the wire retainer 3, FIGS. 3-5 show a quick release (loop) retainer 17, which includes tabs 18 that can be engaged with the wire loops 2 so as to lock together the headrest frame 5 with a backing plate 19 (which can be made in one or several pieces). For ease and security of installation, the quick release retainer 17 can be made of spring tempered stainless steel wire in a ring-shaped configuration, with the tabs 18 protruding outward from the ring. The wire loops 2 then are disposed on the headrest frame 5 in complementary fashion, with the openings of the wire loops directed inwardly so as to receive the tabs 18. In other words, the retainer 17 is in a loop form with the tabs 18 projecting outward, and the wire loops 2 are disposed about a closed shape that matches the loop form of the retainer 17, with their openings facing toward the center of the closed shape for receiving the projecting tabs 18. This combination of material and geometry averts any tendency for the tabs 18 to slip out of the loops 2, but permits easy removal of the headrest assembly 6 from the mesh panel 7 by pulling on the straight sections of the retainer 17 so as to disengage the tabs 18 from out of the wire loops 2.

Although the headrest assembly 6 is particularly adapted for attachment to the relatively light mesh diaphragm 7, it also can be attached to other types (solid, non-woven, or tight woven fabric) seat back pans by inserting the wire loops 2 through holes or grommets preformed in the seat back pan, or through holes of a relatively heavier mesh diaphragm, in which cases, the backing plate 4 or 19 can be omitted as shown in FIG. 5.

The front padding 16 can be made by molding, die cutting, compression cutting, or cutting segments from a contoured strip. Fireblocked high resilient foam can be used in place of the flame resistant foam. A laminated pad type dress cover can replace the foam construction as padding. The headrest frame 5 and backing plate 4 can be made with an abrasive waterjet cutting the shape of the frame from sheets of plastic or reinforced plastic composite.

Thus, embodiments of the invention provide a headrest assembly, which comprises a headrest frame; a pad mounted at a front surface of the headrest frame; loops protruding from a back surface of the headrest frame; and a retainer insertable through the loops for securing the headrest frame to a seat back panel. The headrest frame may also include a backing plate, made in plural or single pieces, that has holes for insertion of the loops, the retainer insertable through the loops for securing the backing plate to the headrest frame. The retainer may be in a loop form with projecting tabs, and the loops are disposed about a closed shape that matches the loop form of the retainer, with their openings facing toward the center of the closed shape for receiving the projecting tabs of the retainer. The loops may be laid into the headrest frame as the frame is laid up from fiber-resin composite sheets or molded from plastic. The loops may be arranged with their openings defining a bent pathway for insertion of the retainer. The loops may be wire or monofilament. The headrest frame may be formed in a cylindrical, conical, or toroidal shape.

Other embodiments of the invention provide a seat back assembly that includes a seat back frame; a panel mounted on the frame; and a headrest attached to the panel, the headrest according to any other embodiment of the invention. Notably, the panel may be a mesh diaphragm, and in such case, the loops may optionally be inserted through grommets provided in the panel.

Other embodiments of the invention implement a method for attaching a headrest assembly to a seat back assembly. The method includes providing holes through a panel of the seat back assembly; providing loops protruding from a rear surface of the headrest assembly; inserting the loops of the headrest assembly through the corresponding holes of the seat back assembly; and inserting a retainer through the loops to fasten the headrest assembly to the seat back assembly. The method may also include, before inserting the retainer through the loops, inserting the loops through holes of a backing plate that the retainer then locks to the seat back panel and to the headrest assembly.

Although exemplary embodiments of the invention have been described with reference to attached drawings, those skilled in the art nevertheless will apprehend variations in form or detail that are consistent with the scope of the invention as defined by the appended claims.

## Claims

1. A headrest assembly (6) comprising:
a headrest frame (5);
a pad (16) mounted at a front surface (12) of the headrest frame (5);
loops (2) protruding from a back surface (11) of the headrest frame (5); and
a retainer (3) insertable through the loops (2) for securing the headrest frame (5) to a seat back panel (7),
wherein the retainer (17) is in a loop form with projecting tabs (18), and wherein the loops (2) disposed about a closed shape that matches the loop form of the retainer (17) with the openings of the loops (2) facing toward the center of the closed shape for receiving the projecting tabs (18) of the retainer (17).

2. The headrest assembly (6) of claim 1 further comprising a backing plate (4), made in plural or single pieces, that has holes (10) for insertion of the loops (2), the retainer (3) insertable through the loops (2) for securing the backing plate (4) to the headrest frame (5).

3. The headrest assembly (6) of claim 1 wherein the loops (2) are laid into the headrest frame (5) as the frame (5) is laid up from fiber-resin composite sheets or molded from plastic.

4. The headrest assembly (6) of claim 1 wherein the loops (2) are arranged with their openings defining a bent pathway for insertion of the retainer (3).

5. The headrest assembly (6) of claim 1 wherein the loops (2) are wire or monofilament.

6. A seat back assembly comprising:
a seat back frame (8);
a panel (7) mounted on the frame (8); and
a headrest assembly (6) according to claim 1 attached to the panel (7); wherein the loops (2) protrude through holes of the panel (7); and wherein the retainer (3) inserted through the loops (2) secures the headrest frame (5) to the panel (7).

7. The seat back assembly of claim 6 further comprising a backing plate (4) made in plural pieces or in a single piece and having holes (10) for insertion of the loops (2), the retainer (3) insertable through the loops (2) for securing the backing plate (4) to the headrest frame (5).

8. The seat back assembly of claim 6 wherein the loops (2) are laid into the headrest frame (5) as the frame (5) is laid up from fiber-resin composite sheets or molded from plastic.

9. The seat back assembly of claim 6 wherein the loops (2) are arranged with their openings defining a bent pathway for insertion of the retainer (3).

10. The seat back assembly of claim 6 wherein the panel is a mesh diaphragm (7).

11. The seat back assembly of claim 10 wherein the loops (2) are inserted through grommets provided in the panel (7).

12. A method for attaching a headrest assembly (6) to a seat back assembly, comprising:
providing holes through a panel of the seat back assembly;
providing loops (2) protruding from a rear surface (11) of the headrest assembly (6);
inserting the loops (2) of the headrest assembly (6) through the corresponding holes of the seat back assembly; and
inserting a retainer (3) through the loops (2) to fasten the headrest assembly (6) to the seat back assembly,
wherein the retainer (17) is in a loop form with projecting tabs (18), and wherein the loops (2) disposed about a closed shape that matches the loop form of the retainer (17) with the openings of the loops (2) facing toward the center of the closed shape for receiving the projecting tabs (18) of the retainer (17).

13. The method of claim 12 further comprising, before inserting the retainer (3) through the loops (2), inserting the loops (2) through holes (10) of a backing plate (4) that the retainer (3) then locks to the seat back panel (7) and to the headrest assembly (6).

## Patentansprüche

1. Eine Kopfstützenanordnung (6), umfassend:
einen Kopfstützenrahmen (5);
ein Polster (16), das an einer Vorderfläche (12) des Kopfstützenrahmens (5) montiert ist;
Schlaufen (2), die aus einer Rückenfläche (11) des Kopfstützenrahmens (5) herausragen; und
einen Halter (3), der durch die Schlaufen (2) einsetzbar ist, um den Kopfstützenrahmen (5) an einer Sitzrückenlehne (7) zu befestigen,
wobei der Halter (17) in Schleifenform mit vorstehenden Laschen (18) vorliegt, und wobei die Schleifen (2) um eine geschlossene Form angeordnet sind, die der Schleifenform des Halters (17) entspricht, wobei die Öffnungen der Schleifen (2) zur Aufnahme der vorstehenden Laschen (18) des Halters (17) zur Mitte der geschlossenen Form zeigen.

2. Die Kopfstützenanordnung (6) nach Anspruch 1, weiter umfassend eine mehrteilige oder einteilige Trägerplatte (4), die Löcher (10) zum Einsetzen der Schlaufen (2) aufweist, wobei der Halter (3) durch die Schlaufen (2) hindurch einsetzbar ist, um die Trägerplatte (4) am Kopfstützenrahmen (5) zu befestigen.

3. Die Kopfstützenanordnung (6) nach Anspruch 1, wobei die Schlaufen (2) in den Kopfstützenrahmen (5) eingelegt sind, während der Rahmen (5) aus Faser-Harz-Verbundplatten oder aus Kunststoff geformt ist.

4. Die Kopfstützenanordnung (6) nach Anspruch 1, wobei die Schlaufen (2) mit ihren Öffnungen so angeordnet sind, dass sie einen gebogenen Weg zum Einsetzen des Halters (17) definieren.

5. Kopfstützenanordnung (6) nach Anspruch 1, wobei die Schlaufen (2) Draht oder Monofilament sind.

6. Eine Sitzlehnenanordnung, umfassend:
einen Sitzlehnenrahmen (8);
eine Platte (7), die auf dem Rahmen (8) montiert ist; und
eine Kopfstützenanordnung (6) nach Anspruch 1, die an der Platte (7) befestigt ist, wobei die Schlaufen (2) durch Löcher der Platte (7) hinausragen, und wobei der Halter (3), der durch die Schlaufen (2) eingeführt ist, den Kopfstützenrahmen (5) an der Platte (7) befestigt.

7. Die Sitzlehnenanordnung nach Anspruch 6, ferner umfassend eine mehrteilig oder einteilig gefertigte Trägerplatte (4) mit Löchern (10) zum Einsetzen der Schlaufen (2), wobei der Halter (3) durch die Schlaufen (2) hindurch einsetzbar ist, um die Trägerplatte (4) am Kopfstützenrahmen (5) zu befestigen.

8. Die Sitzlehnenanordnung nach Anspruch 6, wobei die Schlaufen (2) in den Kopfstützenrahmen (5) eingelegt sind, während der Rahmen (5) aus Faser-Harz-Verbundplatten oder aus Kunststoff geformt ist.

9. Die Sitzlehnenanordnung nach Anspruch 6, wobei die Schlaufen (2) mit ihren Öffnungen derart angeordnet sind, dass ein gebogener Weg zum Einsetzen des Halters (3) definiert ist.

10. Die Sitzlehnenanordnung nach Anspruch 6, worin die Platte (7) eine Gittermembran ist.

11. Die Sitzlehnenanordnung nach Anspruch 10, wobei die Schlaufen (2) durch in der Platte (7) vorgesehene Ösen eingeführt sind.

12. Ein Verfahren zum Befestigen einer Kopfstützenanordnung (6) an einer Sitzlehnenanordnung, umfassend:
Bereitstellen von Löchern durch eine Platte der Sitzlehnenanordnung;
Bereitstellen von Schlaufen (2), die aus einer Rückfläche (11) der Kopfstützenanordnung (6) hinausragen;
Einsetzen der Schlaufen (2) der Kopfstützenanordnung (6) durch die entsprechenden Löcher der Sitzlehnenanordnung; und
Einsetzen eines Halters (3) durch die Schlaufen (2), um die Kopfstützenanordnung (6) an der Sitzlehnenanordnung zu befestigen,
wobei der Halter (17) in Schleifenform mit vorstehenden Laschen (18) vorliegt, und wobei die Schleifen (2) um eine geschlossene Form angeordnet sind, die der Schleifenform des Halters (17) entspricht, wobei die Öffnungen der Schleifen (2) zur Aufnahme der vorstehenden Laschen (18) des Halters (17) zur Mitte der geschlossenen Form zeigen.

13. Das Verfahren nach Anspruch 12, weiter umfassend, vor dem Einsetzen des Halters (3) durch die Schlaufen (2), das Einsetzen der Schlaufen (2) durch Löcher (10) einer Trägerplatte (4), die der Halter (17) dann mit der Sitzrückenplatte (7) und der Kopfstützenanordnung (6) verriegelt.

## Revendications

1. Un ensemble d'appui-tête (6) comprenant:
un cadre d'appui-tête (5);
un patin (16) monté sur une surface avant (12) du cadre de l'appui-tête (5);
des boucles (2) faisant saille d'une surface arrière (11) du cadre de l'appuie-tête (5); et
un dispositif de retenue (3) pouvant être inséré à travers les boucles (2) pour fixer le cadre d'appui-tête (5) à un panneau de dossier de siège (7),
le dispositif de retenue (17) étant sous la forme d'une boucle avec des pattes saillantes (18), et les boucles (2) étant disposées autour d'une forme fermée qui correspond à la forme en boucle du dispositif de retenue (17) avec les ouvertures des boucles (2) tournées vers le centre de la forme fermée pour recevoir les pattes saillantes (18) du dispositif de retenue (17).

2. L'ensemble d'appui-tête (6) selon la revendication 1, comprenant en outre une plaque de support (4), réalisée en plusieurs pièces ou en pièces individuelles, qui comporte des trous (10) pour l'insertion des boucles (2), le dispositif de retenue (3) pouvant être inséré à travers les boucles (2) pour fixer la plaque de support (4) au cadre (5) de l'appui-tête.

3. L'ensemble d'appui-tête (6) selon la revendication 1, dans lequel les boucles (2) sont posées dans le cadre d'appui-tête (5) lorsque le cadre (5) est posé à partir de feuilles composites en résine de fibres ou moulé en plastique.

4. L'ensemble d'appui-tête (6) selon la revendication 1, dans lequel les boucles (2) sont disposées avec leurs ouvertures définissant un chemin courbé pour l'insertion de l'élément de retenue (3).

5. L'ensemble d'appui-tête (6) selon la revendication 1, dans lequel les boucles (2) sont en fil ou en monofilament.

6. Un assemblage de dossier de siège comprenant:
un cadre de dossier de siège (8);
un panneau (7) monté sur le cadre (8); et
un ensemble d'appui-tête (6) selon la revendication 1 fixé au panneau (7), les boucles (2) faisant saillie à travers les trous du panneau (7), et le dispositif de retenue (3) inséré dans les boucles (2) fixant le cadre d'appui-tête (5) au panneau (7).

7. L'assemblage de dossier de siège selon la revendication 6 comprenant une plaque de support (4) réalisée en plusieurs pièces ou en une seule pièce et comportant des trous (10) pour l'insertion des boucles (2), le dispositif de retenue (3) pouvant être inséré à travers les boucles (2) pour fixer la plaque de support (4) au cadre de l'appui-tête (5).

8. L'assemblage de dossier de siège selon la revendication 6, dans lequel les boucles (2) sont posées dans le cadre de l'appui-tête (5) lorsque le cadre (5) est posé à partir de feuilles composites en résine de fibres ou moulé en plastique.

9. L'assemblage de dossier de siège selon la revendication 6, dans lequel les boucles (2) sont agencées avec leurs ouvertures définissant un chemin courbé pour l'insertion de l'élément de retenue (3).

10. L'assemblage de dossier de siège selon la revendication 6, dans lequel le panneau (7) est un diaphragme en treillis.

11. L'assemblage de dossier de siège selon la revendication 10, dans lequel les boucles (2) sont insérées à travers des oeillets prévus dans le panneau (7) .

12. Un procédé de fixation d'un ensemble d'appui-tête (6) à un ensemble de dossier de siège, comprenant:
prévoir des trous à travers un panneau (7) de l'ensemble dossier du siège;
prévoir des boucles (2) dépassant d'une surface arrière (11) de l'appui-tête;
introduire des boucles (2) à partir de l'ensemble d'appui-tête (6) à travers les trous correspondants de l'ensemble dossier du siège; et
introduire un dispositif de retenue (3) à travers les boucles (2) pour fixer l'ensemble appui-tête (6) à l'ensemble dossier de siège,
dans laquelle le dispositif de retenue (17) est sous la forme d'une boucle avec des pattes saillantes (18), et dans laquelle les boucles (2) disposées autour d'une forme fermée qui correspond à la forme en boucle du dispositif de retenue (17) avec les ouvertures des boucles (2) tournées vers le centre de la forme fermée pour recevoir les pattes saillantes (18) du dispositif de retenue (17).

13. Le procédé selon la revendication 12 comprenant en outre, avant d'insérer le dispositif de retenue (3) à travers les boucles (2), l'insertion des boucles (2) à travers des trous (10) d'une plaque support (4) que le dispositif de retenue (3) est verrouillé ensuite au panneau arrière (7) et à l'ensemble appui-tête (6) .
